Europäisches Patentamt

European Patent Office

Office européen des brevets

(19)

(11) Veröffentlichungsnummer: **0 257 562**
**A2**

(12) # EUROPÄISCHE PATENTANMELDUNG

(21) Anmeldenummer: 87112076.2

(22) Anmeldetag: 20.08.87

(51) Int. Cl.⁴: **G11B 21/02** , G11B 15/18 , G11B 5/53

(30) Priorität: 29.08.86 DE 3629509

(43) Veröffentlichungstag der Anmeldung:
02.03.88 Patentblatt 88/09

(84) Benannte Vertragsstaaten:
AT BE CH DE ES FR GB GR IT LI LU NL SE

(71) Anmelder: **Deutsche Thomson-Brandt GmbH**
**Postfach 2060**
**D-7730 Villingen-Schwenningen(DE)**

(72) Erfinder: **Mahr, Peter**
**Brandenburger Strasse 20**
**D-7819 Denzlingen(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Hubeinrichtung für einen Rotor, insbesondere für die Kopfradanordnung eines Recorders.**

(57) Bei einer Hubeinrichtung für einen Rotor (8), der auf einer von einem Stellmotor (M2) angetriebenen, ein Gewinde (6) aufweisenden Welle (4) drehbar und in Axialrichtung (A) der Welle (4) verschiebbar angeordnet ist, wobei die Differenz der Drehzahlen von Rotor (8) und Welle (4) ein Maß für die Hubgeschwindigkeit und Hubrichtung des Rotors (8) ist, insbesondere für die Kopfradanordnung eines Recorders mit einem um eine Achse (A) rotierenden, von einem Magnetband umschlungenen Kopfrad (1), werden der Rotor (8) von einem Motor (M1) mit im wesentlichen konstanter Drehzahl angetrieben und der Stellmotor (M2) so gesteuert, daß die von ihm angetriebene Welle (4) in einer Hubrichtung eine gegenüber der Drehzahl des Rotors (8) größere und in der anderen Hubrichtung kleinere Drehzahl hat, wobei der Bewegungsablauf der Hubeinrichtung durch die Drehzahländerungen des Stellmotors (M2) bestimmt wird.

Fig.1

EP 0 257 562 A2

## Hubeinrichtung für einen Rotor, insbesondere für die Kopfradanordnung eines Recorders

Es sind Recorder, z.B. Videorecorder, bekannt, bei denen ein rotierendes Kopfrad ganz oder teilweise von einem Magnetband umschlungen ist. Das Kopfrad trägt ein oder mehrere Köpfe, die auf dem Magnetband Spuren schräg, quer oder parallel zur Bandkante schreiben.

Es sind auch Recorder bekannt, bei denen für den vorgeschriebenen Schreibvorgang aufeinanderfolgender Spuren oder für sonstige Sonderbetriebsarten das Kopfrad oder eine Kopftrommel zusätzlich eine Hubbewegung in Richtung der Rotationsachse ausführt. Eine derartige Hubbewegung wird z.B. benötigt bei einer sogenannten Matrix-Aufzeichnung mit im wesentlichen parallel zur Bandkante verlaufenden Spuren gemäß der deutschen Patentanmeldung P 35 09 584. Die Hubbewegung kann auch dazu dienen, das Kopfrad in einen anderen Bereich des Magnetbandes zu verschieben. Das ist z.B. sinnvoll, wenn gemäß der DE-OS 33 07 324 auf dem Magnetband zwei oder mehrere Spurbahnen mit unterschiedlichen Signalen aufgezeichnet sind. Eine Hubbewegung ist ebenfalls bei einem Recorder mit Schrägspuraufzeichnung vorgesehen, bei dem gemäß der deutschen Patentanmeldung P 35 17 317 zur Einhaltung von Sonderläufen das Kopfrad in Richtung seiner Achse verschoben wird.

Es ist vorgeschlagen worden (P 35 42 064.2), das rotierende Kopfrad auf einer in gleicher Richtung rotierenden Gewindespindel zu lagern. Wenn die Rotationsgeschwindigkeit der Gewindespindel von der des Kopfrades abweicht, bewegt sich die Spindel in Richtung des Gewindes auf-oder abwärts. Zur Erzeugung dieser Hubbewegung wird eine Steuergröße für einen oder beide Motore verändert. Während des der Signalaufzeichnung oder Wiedergabe dienenden Hubes ist eine präzise Einhaltung der Spurlage durch PLL-Regelung in Verbindung mit Tacho signalen möglich. Die Hubumkehr dagegen bereitet sowohl hinsichtlich Zeitdauer als auch Genauigkeit Schwierigkeiten. Der Erfindung liegt die Aufgabe zugrunde, die Hubbewegung so zu steuern, daß eine exakt reproduzierbare und sehr präzise Spurlage auch beim Ende der Umkehrzeit erreicht wird.

Diese Aufgabe wird durch die im Anspruch 1 beschriebene Erfindung gelöst. Vorteilhafte Weiterbildungen der Erfindung sind in den Unteransprüchen beschrieben.

Im Prinzip besteht die Erfindung darin, daß der Rotor, z.B. das Kopfrad, auf im wesentlichen konstanter Drehzahl gehalten wird und daß der Stellmotor für die Welle allein den Bewegungsablauf des Hubes steuert. Eine von Soll-und Ist-Werten gesteuerte PLL-Schaltung für die Steuerung des Antriebes des Stellmotors erhält die Sollwerte über einen ganzzahlig programmierbaren Frequenzteiler. Während des Nutzhubes (Auf-oder Abwärtsbewegung) wird der Stellmotor auf konstante Drehzahl geregelt, die vorbestimmt größer (abwärts) oder kleiner (aufwärts) ist als die Drehzahl des Kopfrades. Bei Erreichen der jeweiligen Endlage des Nutzhubes wird durch incrementierende oder decrementierende Taktimpulse am Eingang des Teilers derart in die PLL-Schaltung eingegriffen, daß kurze und reproduzierbare Umkehrung erreicht wird. Eine Anordnung nach der Erfindung hat folgende Vorteile:

1) Gleichförmige Hubgeschwindigkeit, wodurch die aufgezeichneten Spuren genauen und gleichen Abstand zueinander haben.

2) Exakt definierte und reproduzierbare Spurlage, bezogen auf den unteren und oberen Startpunkt, wodurch ein späteres Auffinden (Wiedergabe) möglich wird.

3) Exakte und konstante gesamte Zykluszeit eines Bewegungsablaufs, wodurch die vertikale Schreibdichte (urabbbstand) und auch die Umkehrzeit konstant gehalten werden.

4) Die Höhenlagen der Videoköpfe (Drum-Höhe) über einer Bezugsebene entsprechen nach jedem vollen Zyklus (1 x auf; 1 x ab) wieder exakt demselben Wert. Dies ist wichtig, weil die Korrektur der Spurlage mittels einer evtl. ATF so lange dauert, daß sonst die jeweiligen Anfangsspuren eines neuen Blockes verlorgen gehen bzw. die Fehlerrate drastisch ansteigt.

5) Kurze Umkehrzeit für die Änderung der Hubbewegungsrichtung, wodurch

a) während des Umkehrens keine oder nur wenig evtl. aufzuzeichnenden und/oder zu lesenden Daten mittels Zwischenspeicher aufgefangen werden müssen.

b) der ganze oder nahezu ganze Hub zum Aufzeichnen der Spuren genutzt werden kann.

c) die Hubbewegung während des Umkehrens keinen oder nur geringen zusätzlichen Bandbedarf an den Seitenkanten des Bandes erfordert, und so die Videoköpfe nicht über die Bandkante hinauslaufen können.

Zur näheren Erläuterung der Erfindung wird im folgenden ein Ausführungsbeispiel anhand der Zeichnungen erläutert. Diese zeigen in:

Fig. 1 ein Ausführungsbeispiel der Hubeinrichtung mit einem rotierenden Kopfrad und mit einer rotierenden Gewindespindel.

Fig. 2 ein Diagramm zur Steuerung der Hubeinrichtung

Fig. 3 eine Draufsicht auf die Anordnung nach Fig. 1

Fig. 4 eine Steuerschaltung für die in Fig. 1 verwendeten Motoren,

Fig. 5 eine Steuerschaltung für die Hubeinrichtung,

Fig. 6-9 Diagramme zur Betriebsweise der in Fig. 5 dargestellten Schaltung,

Fig. 10 Zahlenbeispiele für die Umkehrzeit.

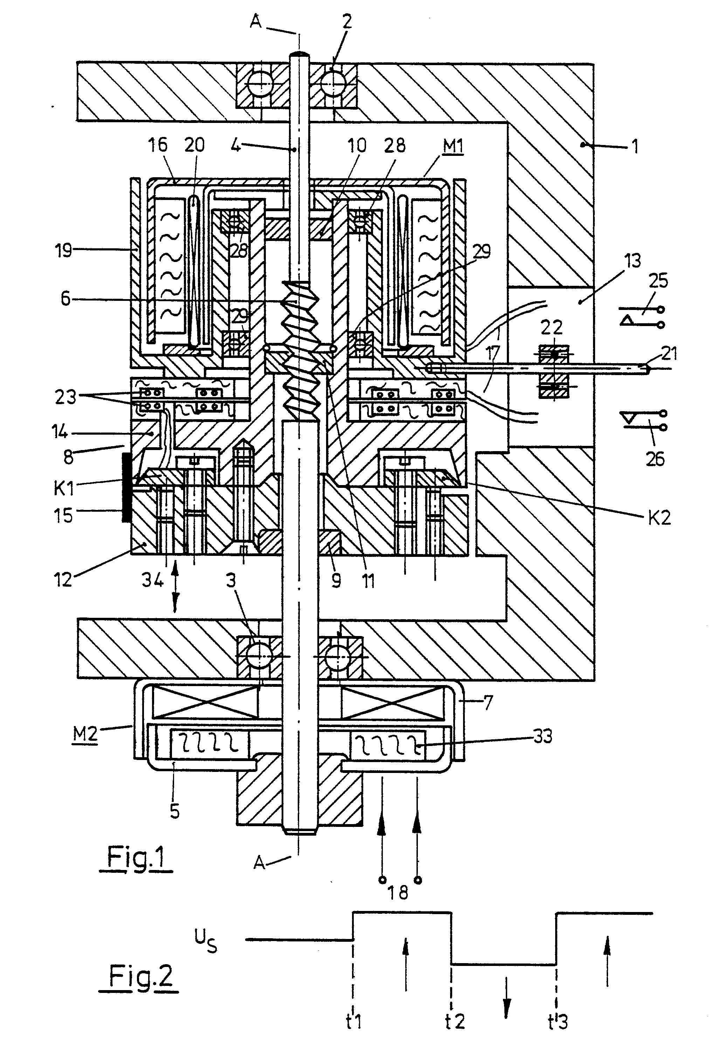

Fig.1 zeigt eine Hubeinrichtung für die Kopftrommel eines Videorecorders. Ein ortsfester Rahmen 1 ist mit Lagern 2,3 für eine drehbare Welle 4 versehen. Das untere Ende der axial unverschiebbar gelagerten Welle 4 ist mit dem Rotor 5 eines Motors M2 verbunden. Die Welle 4 ist mit einer Gewindespindel 6 versehen. Der Stator 7 des Motors M2 ist ortsfest gelagert, z.B. fest mit dem Rahmen 1 verbunden. Das Kopfrad 8, das die Kopfscheibe 12, die Köpfe K1, K2 und ein Trommelteil 14 enthält, ist über die Gleitlager 9,10 drehbar auf der Welle 4 gelagert. Dabei greift die Gewindespindel 6 in die fest mit der Trommel 14 verbundene Mutter 11 ein. Das Magnetband 15 ist um das Kopfrad 8 herumgeführt, z.B. über einen Winkel von 180°. Die Signale werden von den Köpfen K1, K2 über die rotierenden Übertrager 23 und die flexiblen Leitungen 17 den Aufnahme-oder Wiedergabeverstärkern zugeführt. An dem Trommelteil 14 ist außerdem der Rotor 16 eines Motors M1 befestigt. Der Stator 19 des Motors M1 ist über die Lager 28,29 auf dem Trommelteil 14 relativ zu diesem Teil 14 drehbar gelagert und enthält die Statorwicklung 20. Der Stator 19 ist über einen Stift 21 und ein Lager 22 so mit dem Rahmen 1 verbunden, daß der Stift 21 in einen Schlitz 13 des Rahmens 1 in Axialrichtung A-A bewegbar ist, jedoch eine Drehung des Stators 19 verhindert.

Die Teile 9,10,11,12,K1,K2,14,16 bilden die um die Achse A rotierende Kopfradanordnung 8. Die Teile 19,20,21,30 bilden den Teil der Kopftrommel, der nicht rotieren kann, aber zu sammen mit der Kopfradtrommel 8 in Richtung der Achse A verschiebbar ist.

Die Wirkungsweise ist folgende: Der das Kopfrad 8 antreibende Motor M1 wird auf eine genaue Drahzahl von etwa 6000 Upm gebracht, so daß das Kopfrad 8 mit dieser Drehzahl um die Achse A rotiert. Die Welle 4 mit der Gewindespindel 6 wird durch den Motor M2 in der gleichen Richtung wie das Kopfrad 8 und mit genau der gleichen Umdrehungszahl angetrieben. Wegen der gleichen Umdrehungszahlen besteht zwischen der Gewindespindel 6 und der Mutter 11 keine Relativbewegung, so daß das Kopfrad 8 rotiert, in Richtung der Achse A jedoch nicht bewegt wird. In Fig. 2 unten ist dieser Zustand vor t1 angedeutet. Im Zeitpunkt t1 wird die über die Klemmen 18 an die Wicklung 33 angelegte Steuerspannung Us erhöht, so daß der Motor M2 schneller läuft, z.B. mit 6010 Upm. Dadurch dreht sich die Gewindespindel 6 in die Mutter 11 langsam hinein, so daß das Kopfrad 8 in erwünschter Weise eine Hubbewegung 34 nach unten ausführt. Im Zeitpunkt t2 werden die Steuerspannung Us und damit die Drehzahl der Gewindespindel 6 entsprechend verringert, so daß jetzt die Gewindespindel 6 sich aus der Mutter 11 herausdreht und das Kopfrad 8 in Hubrichtung 34 nach oben bewegt wird. Der Amplitudensprung der Spannung Us bei t1,t2,t3 bestimmt also die Geschwindigkeit der Hubbewegung 34 und die Dauer t1 - t2 oder t2 - t3 die Amplitude der Hubbewegung 34.

Jeweils an den Grenzen der maximal zulässigen Hubbewegung wirkt der Stift 21 auf Kontakte 25 oder 26 ein, die den Antrieb der Motoren M1,M2 so verändern oder abschalten, daß die Hubbewegung aufhört. Dadurch wird verhindert, daß die Mutter 11 über die Enden der Gewindespindel 6 hinaus bewegt wird.

Für den Motor M2 wird in einem erprobten Ausführungsbeispiel ein eisenloser, elektronisch kommutierter sogenannter Luftspulenmotor verwendet und für den M1 ein elektronisch kommutierter Flachläufer. Es können jedoch auch mechanisch kommutierte Motoren, Ankermotoren und dgl. verwendet werden.

Die Steuerelektronik für die beiden Motoren M1,M2 ist so ausgebildet, daß die beiden Motoren synchron und gleichmäßig hochlaufen und wieder auslaufen. Das ist wichtig, damit nicht durch eine zu große Abweichung der Drehzahlen der beiden Motoren M1,M2 eine unzulässige große Hubbewegung 34 entsteht.

Das Zusammenwirken zwischen der Mutter 11 und der Gewindespindel 6 kann auch durch ein Kugelgewindegetriebe realisiert werden. Bei einem derartigen Getriebe sind über einen Teil eines Gewindeganges Kugeln angeordnet, die etwa nach Durchlauf einer Windung in eine Kammer oder einen Hohlraum der Mutter zurückfallen und dann erneut in einen Gewindegang eingeführt werden. Derartige Kugelgewindegetriebe sind handelsüblich und ermöglichen eine besonders spielfreie, reibungslose und saubere Übertragung der Bewegung.

Der Anordnung gemäß Fig. 1 kann eine Einrichtung zugeordnet sein, die den für das jeweilige Magnetband 15 optimalen Hub hinsichtlich Lage und Amplitude ermittelt und dementsprechend den Hub durch die Steuerspannung Us einstellt. Eine derartige Einrichtung ist beschrieben in der älteren Patentanmeldung P 35 29 008.0. An dem Rahmen 1 kann zusätzlich der sogenannte Capstan angeordnet sein, der den Längstransport des Magnetbandes 15 mit einer geringen Geschwindigkeit von z.B. 20mm pro Sekunde bewirkt.

Bei dem beschriebenen Ausführungsbeispiel liegen etwa folgende Werte vor:
Umdrehungszahl des Kopfrades 8: 6000 Upm
Durchmesser des Kopfrades 8: 22,9 mm
Maximale Hubbewegung 34: 4 mm
Breite des Magnetbandes 15 : 8 mm

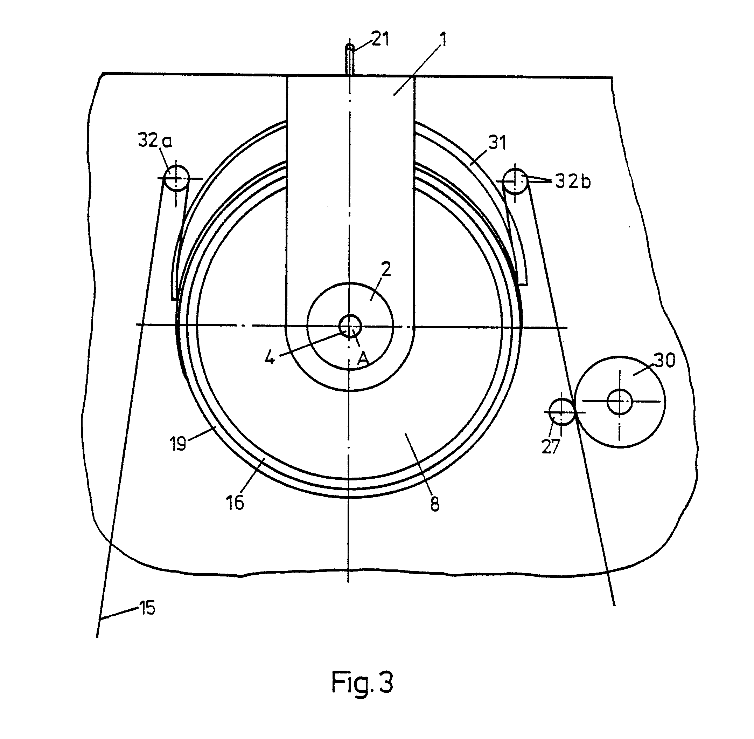

Fig. 3 zeigt eine Draufsicht auf die Anordnung nach Fig. 1. Das Magnetband 15 ist über die Umlenkstifte 32a und 32b etwa über einen Winkel von 180° um das Kopfrad 8 herumgeführt. Das Band 15 stützt sich dabei auf dem feststehenden Führungsschuh 31 ab, der fest mit dem Rahmen 1 verbunden und in Fig. 1 nicht dargestellt ist. Das Band 15 hat also relativ zum Rahmen 1 immer die gleiche Lage in Hubrichtung 34. Der Längstransport des Bandes 15 erfolgt mit dem Capstan 27 und der Gummiandruckrolle 30, die ebenfalls an dem Rahmen 1 gelagert sind.

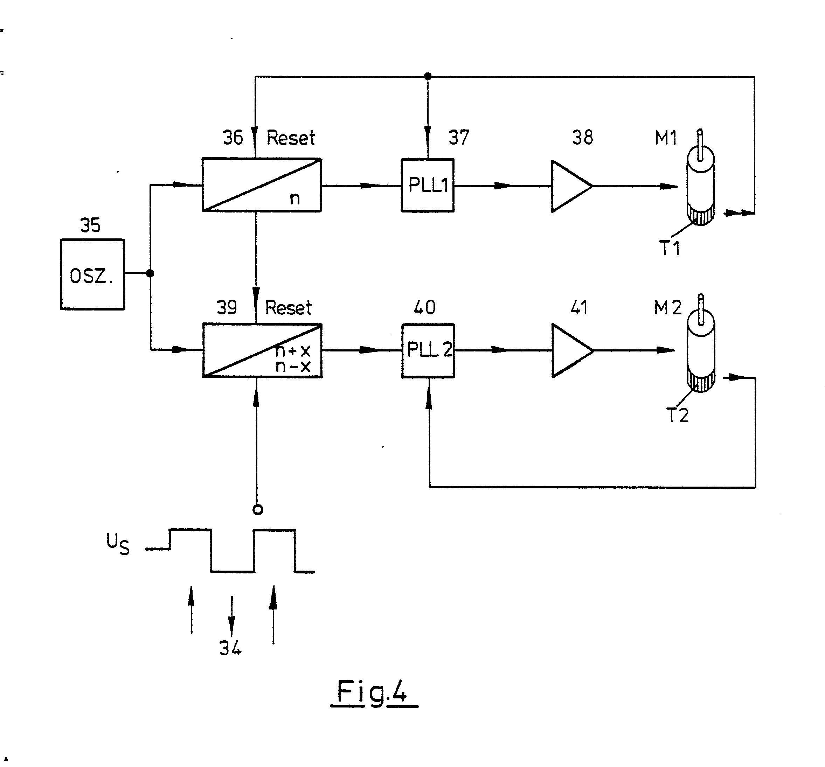

Fig. 4 zeigt eine Schaltung zur Steuerung der beiden Motoren M1,M2. Für die synchrone Steuerung ist eine gemeinsame Referenzfrequenzquelle 35 vorgesehen, die über den Frequenzteiler 36 mit dem Teilerfaktor n, die PLL-Schaltung 37 und die Treiberstufe 38 den mit einem Tachogenerator T1 versehenen Motor M1 und außerdem über den Frequenzteiler 39, die PLL-Schaltung 40 und die Treiberstufe 41 den mit dem Tachogenerator T2 versehenen Motor M2 steuert. Der Motor M1 soll im eingeschwungenen Zustand mit konstanter Drehzahl laufen. Die Drehzahl des Motors M2 ist durch eine Änderung des Teilerfaktors n auf n+x oder n-x durch die Steuerspannung Us veränderbar, so daß sich die Drehzahl des Motors M2 entsprechend der Steuerspannung Us für die Erzeugung der Hubbewegung 34 ändert. Bei dieser Schaltung wird davon ausgegangen, daß eine sofortige Änderung der Drehzahl von n + x auf n - x auch eine sofortige Umkehr des Hubes bewirkt. Mit einer solchen Umsteuerung kann jedoch wegen der Trägheit der rotierenden Massen und der PLL-Schaltung keine genaue Reproduktion der Lage erreicht werden.

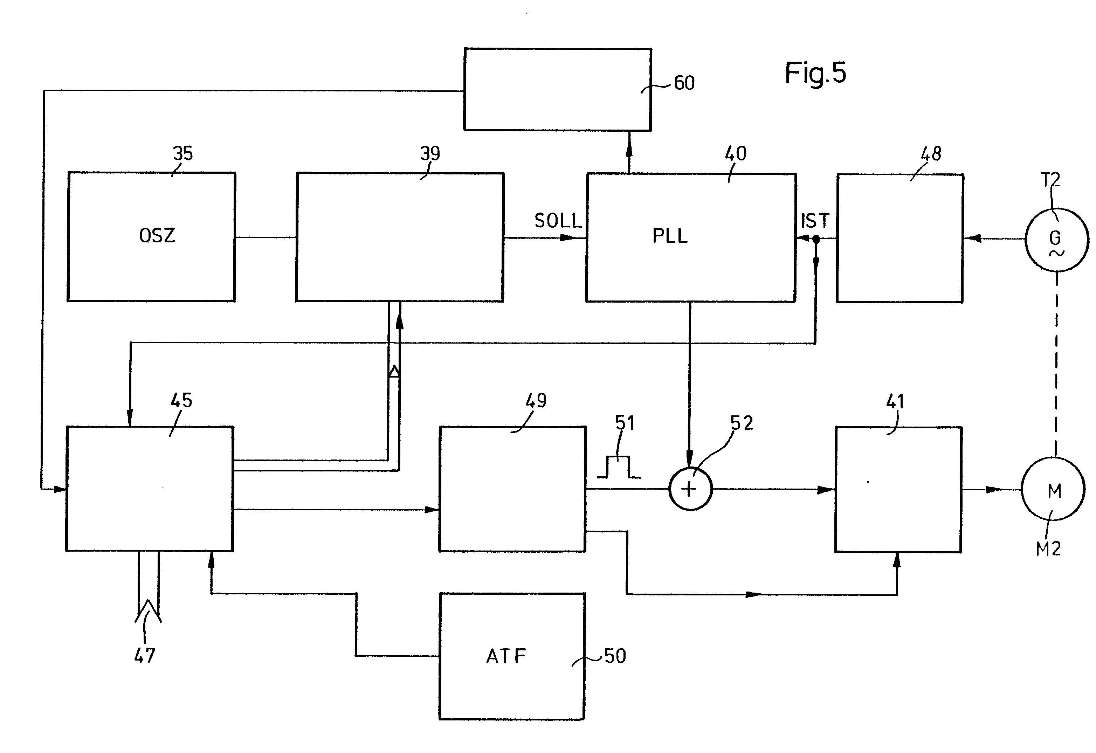

Fig. 5 zeigt eine abgewandelte Steuerschaltung, mit der das Drehzahlverhalten des Motors M2 so gesteuert wird, daß hohe Spurgenauigkeit und geringe Umkehrzeiten erzielt werden. Als Sollwert für die PLL-Regelung 39 dient wie in Fig. 4 eine von der Referenzfrequenzschaltung 35 abgeleitete Frequenz. Als Istwertgeber wird der Mäandertacho T2 eingesetzt, der die erforderliche Frequenz-und Phasenregelgenauigkeit für die PLL-Schaltung 39 beinhaltet. Der Motor M2, der auch als Stellmotor bezeichnet werden kann, ist maßgebend für den gesamten Bewegungsablauf der Hubeinrichtung. Der Motor M1 ist in Fig. 5 nicht dargestellt, aber nur der Einfachheit wegen. Die Sollfrequenz ist auch in Fig. 5 durch die Referenzfrequenz 35 und durch den Frequenzteiler 39 gewonnen. Sie wird durch einen programmierbaren Frequenzteiler auf einen Wert festgesetzt, der eine gewünschte Hubgeschwindigkeit (z.B. n - x) erzeugt. Ein Zähler oder Mikroprozessor 45 (µP) übernimmt die Ablaufsteuerung. Ihm werden einerseits Eingangsdaten 47, z.B. die Steuerspannung Us aus Fig. 2 von den Kontakten 25, 26 aus Fig. 1, und andererseits Impulse des Tachogenerators T2 oder eines Tachoverstärkers 48 zugeführt. Der Mikroprozessor 45 wirkt bei Erreichen der Hubgrenzen zur Einleitung der Richtungsumkehr wie folgt (Block 49 bleibt bei dieser ersten Betrachtung unberücksichtigt): Die dem Eingang des Mikroprozessors 45 vom Tachogenerator 48 zugeführten Impulse bewirken am Ausgang des Prozessors 45 durch den Einfluß der Steuerdaten ein Steuerwort (mit beispielsweise 12 bit) und damit ein Incrementieren oder Decrementieren der Programmiereingänge des Frequenzteilers 39 mit jedem Tachoimpuls um jeweils einen ganzzahligen Wert. Dadurch wird je nach Hubrichtung eine lineare Verringerung oder Vergrößerung der Sollfrequenz für die PLL-Regelung 40 erreicht. Die Ausgangsgröße der PLL-Regelung 40 folgt nun dieser stufenförmigen Frequenzänderung, so daß der Stellmotor M2 eine konstante Beschleunigung erfährt bis die andere, wiederum konstant zu haltende Geschwindigkeit (n + x) erreicht ist. Beim Errei chen der Endgeschwindigkeit (n + x) stoppt der Beschleunigungsvorgang dadurch, daß die Incrementierung oder Decrementierung infolge der geänderten Eingangsdaten 47 aus Prozessor 45 nicht mehr stattfindet. Dadurch wird die Drehgeschwindigkeit der Motoren M1 und M2 wieder gleichermaßen durch PLL-Regelung konstant gehalten und die Kopftrommel führt die rückläufige Hubbewegung aus, weil der Stellmotor nun mit n + x PLL-gesteuert ist.

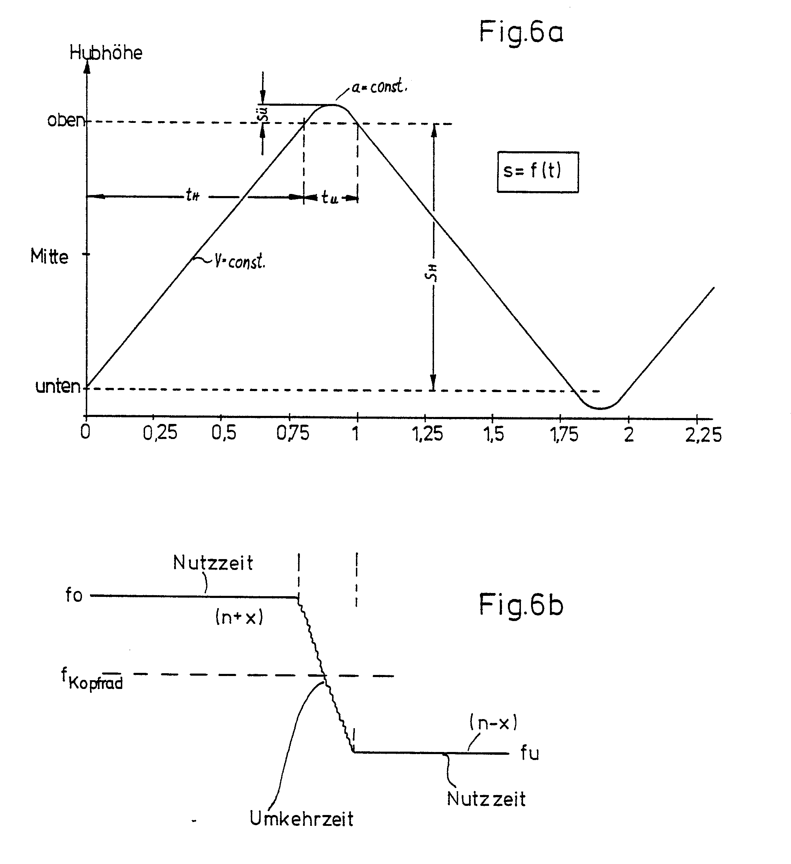

Fig. 6a zeigt die Hubbewegung über der Zeit. Die Umkehrzeit ist klein gegenüber der Hubzeit.

Fig. 6b zeigt die Frequenzcharakteristik über der Zeit. Die Umkehrzeit ist konstant, da jeweils eine genau gleiche Anzahl von Incrementierungen oder Decrementierungen der Programmiereingänge des Frequenzteilers 39 stattfinden, welche phasensynchron zum Ausgangssignal des Tachogenerators T2 sind. Da die PLL-Schaltung 40 und somit der Stellmotor M2 dieser Frequenzänderung folgen, resultiert daraus, daß der Motor während einer ganzzahligen Anzahl von Tachoimpulsen beschleunigt (abbremst). Die für die Umkehrung erforderliche Beschleunigung der Hubbewegung ist bis auf den Umkehrpunkt konstant bemessen, so daß das Motordrehmoment während des gesamten Vorganges voll ausgenutzt wird.

Daraus folgt, daß der zurückgelegte Weg der Hubbewegung auch konstant ist. Dies bedeutet, daß der Bewegungsablauf der Videoköpfe mit jedem vollen Zyklus (Aufwärtsbewegung - Umkehrung - Abwärtsbewegung - Umkehrung) exakt gleich vonstatten geht. Dadurch werden die einzelnen Spuren eines auf dem Band aufgezeichneten Blockes von Spuren, insbesondere nach dem Umkehren, jeweils wieder aufgefunden, ohne daß eine evtl. vorhandene ATF-Schaltung (Automatic Track Follower) 50 dies mit einem Verlust der jeweils ersten Spuren bewerkstelligen muß. Das ATF-Signal wird nun dazu benutzt, zu Beginn des Ab tastvorganges die gleiche Lage von Spur und Videokopf zu bewirken und im weiteren Verlauf die evtl. vorkommenden geringen Abweichungen infolge äußerer Störeinflüsse auszuregeln. Die Ankopplung der ATF-Information an den Regelkreis geschieht über den Mikroprozessor 45, wobei die Eingangsdaten des Frequenzteilers 39 und damit der Bewegungsablauf des Kopfrades so verändert werden, daß die Abweichung von Spur und Videokopf minimal wird.

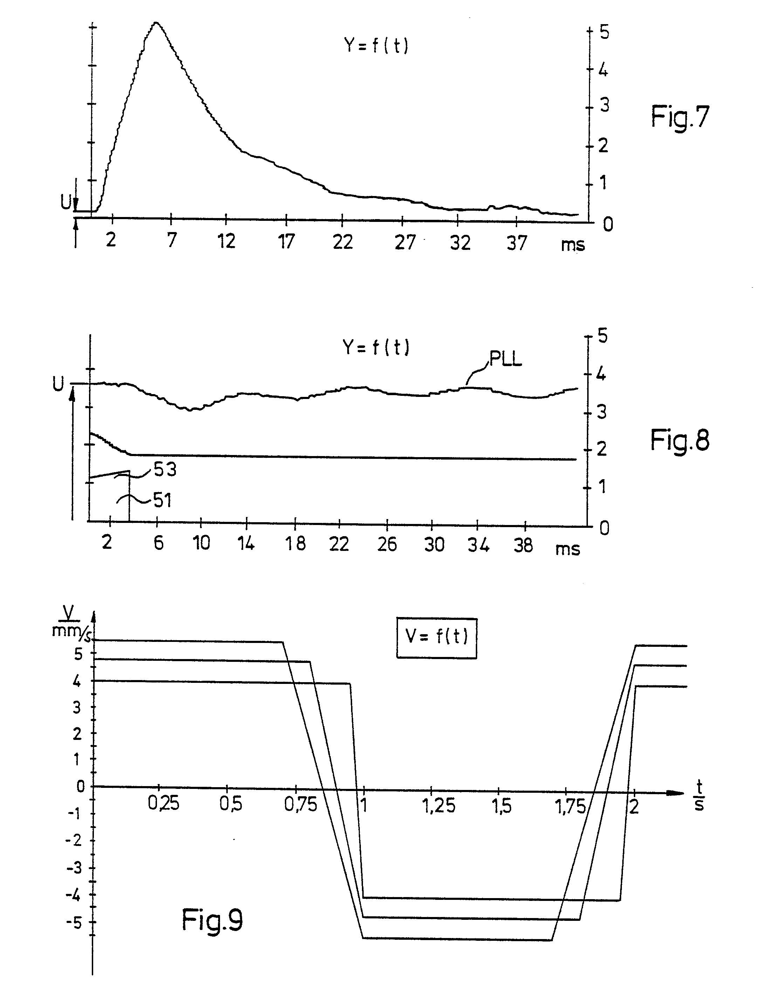

Fig. 7 zeigt den Phasenwinkel eines phasengeregelten Antriebs des Motors M2 über der Zeit (Y-Achse ist in s in μm bzw. Spurabweichung umgerechnet). Die Phasenregelung ist bei dem gesamten Beschleunigungs-Vorgang wirksam gerastet und wirkt wie im folgenden anhand der Fig. 7 und 8 beschrieben.

Zum Zeitpunkt t = 0 wird die Beschleunigung wirksam. Innerhalb der folgenden ca. 6 ms dauernden Zeit erhöht die PLL-Regelung 40 durch Vergrößern des Phasenwinkels den Motorstrom, so daß der Motor M2 der wachsenden Eingangsfrequenz vom programmierbaren Frequenzteiler 39 folgen kann. Nach ca. 6msec wird der Phasenwinkel nicht mehr vergrößert, die Beschleunigung also gestoppt. Der Hub hört auf. Nach Beendigung des Beschleunigungsvorganges wird der nun überschüssige Phasenwinkel wieder abgebaut, indem die Drahzahl zunächst über denSollwert steigt und dann auf den Sollwert einschwingt. Nach ca. 18 ms ist der Phasenwinkel bis auf einen Restbetrag abgebaut, der einer Restabweichung von Spur zu Videokopf von 1 μm entspricht.

Gemäß Fig. 7 kann in der Beschleunigungs-Phase die PLL-Regelung 40 durch das integrale Verhalten eines Phasenvergleichers den Phasenwinkel und somit den Motorstrom nicht sprunghaft ändern. Dadurch steht im ersten Teil der Kurve nicht das volle Motordrehmoment zur Verfügung. Ebenso ist die Rücknahme des Phasenwinkels (6 ms bis ca. 22 ms) ein relativ langwieriger Vorgang, der die Umkehrzeit verlängert.

Um die Umkehrzeit weiter zu verkürzen und die Spurabweichung zu verringern, wird mit Beginn der Beschleunigungsphase in einer Steuerschaltung 49 ein Stromimpuls 51 erzeugt, welcher über einen Addierer 52 auf den Motor M2 oder seine Treiberstufe 41 geführt wird. Die Amplitude des Stromimpulses 51 entspricht im wesentlichen der zur Beschleunigung nötigen Energie. Die PLL-Regelung 40, welche über denselben Addierer 52 an den Motor M2 angekoppelt ist, stellt die zum Beschleunigungsablauf notwendige restliche Energie zur Verfügung. Dadurch wird erreicht, daß in wesentlich kürzerer Zeit eine Spurgenauigkeit oder geringe Spurabweichung erreicht wird.

Fig. 8 zeigt über der Zeit, daß ein solcher Beschleunigungsvorgang mit 3,9 ms gemessen worden ist. Dies bedeutet bei dem verwendeten 60poligen Tachogenerator T2, daß die Anpassung an die Spur nach ca. 0,4 Umdrehungen erreicht war.

Aufgrund der Motorkennlinie wird der genannte Stromimpuls 51 nicht für den gesamten Beschleunigungsvorgang konstant gehalten. Vielmehr wird durch Vorentzerrung 53 die zu jedem Zeitpunkt nötige Beschleunigungsenergie bereitgestellt.

Die genaue Größe des Stromimpulses 51 kann bei unterschiedlichen Umgebungsbedingungen andere Werte verlangen. Um diesen Wert den jeweiligen Bedingungen anzupassen, ist eine Schaltung 60 vorgesehen. Diese registriert während der Beschleunigung die Phasenabweichung und veranlaßt dadurch über den Prozessor 55, daß beim nächsten Beschleunigungsvorgang die Amplitude des Stromimpulses 51 derart verändert wird, daß eine Minimierung des Phasenfehlers erreicht wird. Es ist möglich (und besser), viele Werte innerhalb der Dauer des Impulses 51 zu messen und zur Korrektur zu benutzen. Gegen Ende des Impulses 51 wird seine Amplitude erhöht, weil in diesem Zeitbereich der Motor M2 höhere Reibung überwinden muß. Das ist besonders dann der Fall, wenn die Kugelumlaufmutter in Teil 11 ersetzt wird durch eine zur Verringerung von Axialspiel vorgespannte Gewindemutter.

Alle bisher betrachteten Vorgänge gelten nicht nur für den Beschleunigungsvorgang (Absenken) sondern auch für den Bremsvorgang (Hub).

Die PLL-Regelung 40 zur Erreichung der Spurhaltung ist ohne Änderung der Bedingungen in Funktion. Das heißt, daß der zur Regelung erforderliche Phasenwinkel sowohl beim Beschleunigen wie auch beim Bremsen im wesentlichen gleich bleibt. Dagegen wird der zusätzliche Stromimpuls 51 in der Wirkungsweise verschieden zur Anwendung gebracht. Beim Beschleunigen wird der Stromimpuls 51 so auf den Motor geführt, daß dieser in gleicher Weise wie die PLL-Schaltung 40 den Motor M2 antreibt.

Beim Bremsen wird der Stromimpuls 51 so auf den Motor M2 geführt, daß dieser abgebremst wird. Bei einem mechanisch kommutierten Motor bedeutet das eine Abführung der aus der Induktionsspannung resultierenden Energie. Die PLL-Regelung 40 arbeitet weiterhin in "Beschleunigungsrichtung", hält den erforderlichen Phasenwinkel aufrecht und sichert somit ein sehr schnelles Einschwingen.

Das Umschalten von Beschleunigung auf Abbremsung kann durch die Kontakte 25 und 26 in Fig. 1 gemacht oder durch Nutzung der obersten oder untersten Spur, indem diese entweder optisch oder signalmäßig gelesen wird und ihre Erkennung einen Befehl für den Mikroprozessor 45 auslöst. Dies kann in folgender Weise geschehen:

Vor dem eigentlichen Aufnahmevorgang wird alternierend aufgezeichnet und gelesen, danach wird die Kopftrommel eine Spurbreite nach oben bewegt und derselbe Vorgang wiederholt. Diese Prozedur wird solange fortgeführt, bis keine Daten mehr gelesen werden können. Somit wurde die Obergrenze des Bandes gefunden. Durch Abzählen der beiden Tachoimpulse und deren Differenzbildung kann damit auch die unterste zur Datenaufzeichnung verwendete Bandstelle gefunden werden.

Jeder aufgezeichneten Spur wird zur Nutzinformation noch eine weitere Nachricht hinzugefügt, aus der die Spurnummr hervorgeht. Somit können bei Wiedergabe eines bespielten Bandes durch Lesen dieser Spurnummern die Positionen der Spuren und somit die Bandgrenzen ermittelt werden.

Wichtig ist, daß die Höhe der vergleichbaren Punkte am Beginn und Ende der Umkehrzeit gleich ist. Die soweit beschriebene Regelung wurde am Beispiel eines Videorecorders mit extremen Anforderungen an Spurgenauigkeit erläutert. Sie kann als Wendegetriebe auch für andere Zwecke verwendet werden. Beispielsweise für Datenrecorder zur Speicherung von Computerdaten mit bewegtem, wie auch mit stehendem Band, für digitale Audio-Aufzeichnung und Wiedergabe mit wesentlich geringeren Anforderungen.

Bei der beschriebenen Hubeinrichtung sind folgende Begriffe verwendet:

$V$ = Hubgeschwindigkeit

$S_H$ = Hubhöhe (Aufzeichnung)

$S_u$ = Überhub (jeweils oben und unten)

$a$ = Umkehrbeschleunigung

$t$ = Zylkuszeit

$t_H$ = Hubzeit (Aufzeichnung)

$t_u$ = Umkehrzeit

Vorgegebene Werte sind:

$t$ = 0,96 s

$S_H$ = 3,61 mm

Variable Werte sind:

$$V = \frac{S_H}{t_H} \qquad t_H = t - t_u$$

$$a = \frac{2V}{t_u} = \frac{2\,S_H}{t_u \cdot t_H} = \frac{2\,S_H}{t \cdot t_u - t_u^2}$$

$$S_u = \frac{1}{2} \cdot a \cdot \left[\frac{t_u}{2}\right]^2 = \frac{1}{8} \cdot a \cdot t_u^2 = \frac{S_H \cdot t_u}{4 \cdot t_H} = \frac{S_H \cdot t_u}{4\,(t - t_u)}$$

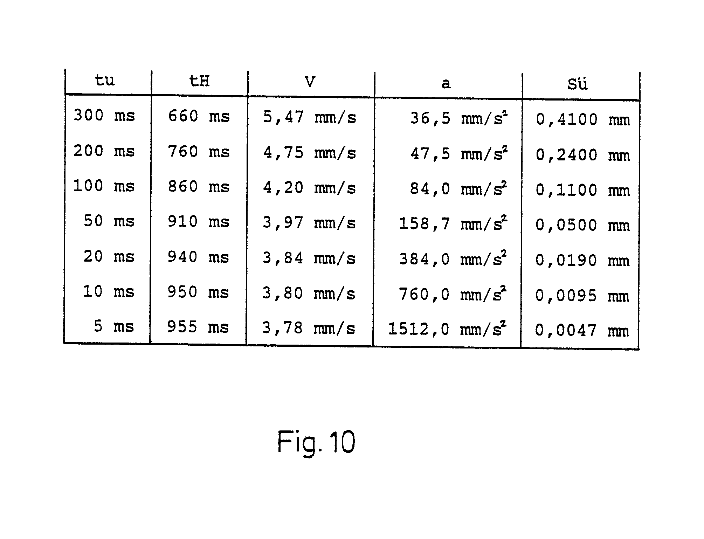

In Fig. 10 sind Zahlenbeispiele angegeben, wobei $t$ = 0,96 s die gesamte Zykluszeit ist, $S_H$ = 3,61 die Höhe des nutzbaren Spurenblocks (Matrix) auf dem Band ist und die Umkehrzeit variabel gestaltet ist.

## Ansprüche

1. Hubeinrichtung für einen Rotor (8), der auf einer von einem Stellmotor (M2) angetriebenen, ein Gewinde (6) aufweisenden Welle (4) drehbar und in Axialrichtung (A) der Welle (4) verschiebbar angeordnet ist, wobei die Differenz der Drehzahlen von Rotor (8) und Welle (4) ein Maß für die Hubgeschwindigkeit und Hubrichtung des Rotors (8) ist, insbesondere für die Kopfradanordnung eines Recorders mit einem um eine Achse (A) rotierenden, von einem Magnetband umschlungenen Kopfrad (1), das durch eine Hubbewegung in Richtung der Achse (A) verstellbar ist, <u>dadurch gekennzeichnet</u>, daß der Rotor (8) von einem Motor (M1) mit im wesentlichen konstanter Drehzahl angetrieben wird, daß der Stellmotor (M2) so gesteuert wird, daß die von ihm angetriebene Welle (4) in einer Hubrichtung eine gegenüber der Drehzahl des Rotors (8) größere und in der anderen Hubrichtung kleinere im wesentlichen konstante Drehzahl hat, und daß zur Hubrichtungsumkehr des Rotors (8) seine Drehzahländerungen ein Maß für den Bewegungsablauf der Hubeinrichtung sind.

2. Hubeinrichtung nach Anspruch 1, <u>dadurch gekennzeichnet</u>, daß zur Steuerung des Stellmotors (M2) eine PLL-Schaltung (40) dient, daß der PLL-Schaltung an einem Eingang von einer Referenzfrequenzquelle hoher Genauigkeit über einen programmierbaren Frequenzteiler (39) ein der gewünschten Hubgeschwindigkeit entsprechender Sollwert und an einem anderen Eingang ein Istwert von einem mit dem Stellmotor gekuppelten Tachogenerator (T2) zugeführt wird und daß der programmierbare Frequenzteiler für ein fest vorgegebenes ganzzahliges Teilungsverhältnis ausgelegt ist, so daß ein kurzzeitiger Umkehrhub mit reproduzierbarem Hubende erreichbar ist.

3. Hubeinrichtung nach Anspruch 2, <u>dadurch gekennzeichnet</u>, daß dem Programmiereingang des Frequenzteilers (39) im Steuerweg des Stellmotors (M2) ein incrementierendes oder decrementierendes Steuerwort (Us) zugeführt wird, derart, daß eine lineare Änderung der Sollfrequenz und damit eine konstante Hubbeschleunigung für den Umkehrvorgang bewirkt wird.

4. Hubeinrichtung nach Anspruch 3, <u>dadurch gekennzeichnet</u>, daß das Steuerwort (Us) eine von einem Mikroprozessor (45) abgeleitete Taktimpulsfolge ist.

5. Hubeinrichtung nach Anspruch 3, <u>dadurch gekennzeichnet</u>, daß die Taktimpulsfolge von einem Mikroprozessor (45) abgeleitet wird, dem einerseits Frequenz und Phase des Stellmotors (M2) entsprechende Tachosignale und andererseits Eingangsdaten wie ein Hubendsignal zugeführt werden.

6. Hubeinrichtung nach Anspruch 4, <u>dadurch gekennzeichnet</u>, daß zu Beginn der Umkehrzeit der Ausgangsspannung der PLL-Schaltung (40) vom Mikroprozessor ein Steuerimpuls (51) überlagert wird, der den Stellmotor (M2) schnell auf die erforderliche Drehzahl bringt.

7. Hubeinrichtung nach Anspruch 5, <u>dadurch gekennzeichnet</u>, daß die Amplitude des Impulses (51) so geformt ist, daß ein vorbestimmtes Drehzahlverhalten des Stellmotors (M2) erreicht wird (Vorentzerrung der Motorkennlinie).

8. Hubeinrichtung nach Anspruch 4 - 7, <u>dadurch gekennzeichnet</u>, daß der Eingang es Mikroprozessors (45) mit einer ATF-Signalquelle (50) verbunden ist.

9. Hubeinrichtung nach einem der Ansprüche 4 - 8, <u>dadurch gekennzeichnet</u>, daß der Eingang des Mikroprozessors (45) mit einer Signalquelle (60) verbunden ist, die aus der PLL-Regelschaltung (40) Fehlsignale ableitet und die Größe und Form des Impulses (51) nachsteuert.

_Fig.1_

_Fig.2_

$U_S$

t1    t2    t3

Fig. 3

Fig.4

Fig.5

Fig.6a

Fig.6b

0 257 562

Y = f ( t )

Fig.7

Y = f ( t )          PLL

U

53
51

Fig.8

V = f(t)

Fig.9

H86/053-6

| tu | tH | V | a | Sü |
|---|---|---|---|---|
| 300 ms | 660 ms | 5,47 mm/s | 36,5 mm/s$^2$ | 0,4100 mm |
| 200 ms | 760 ms | 4,75 mm/s | 47,5 mm/s$^2$ | 0,2400 mm |
| 100 ms | 860 ms | 4,20 mm/s | 84,0 mm/s$^2$ | 0,1100 mm |
| 50 ms | 910 ms | 3,97 mm/s | 158,7 mm/s$^2$ | 0,0500 mm |
| 20 ms | 940 ms | 3,84 mm/s | 384,0 mm/s$^2$ | 0,0190 mm |
| 10 ms | 950 ms | 3,80 mm/s | 760,0 mm/s$^2$ | 0,0095 mm |
| 5 ms | 955 ms | 3,78 mm/s | 1512,0 mm/s$^2$ | 0,0047 mm |

Fig. 10

H86/053-7